# FASCICULE DE BREVET EUROPEEN

(11) **EP 0 521 120 B1**
(45) Date de publication et mention de la délivrance du brevet: **18.10.1995**
(21) Numéro de dépôt: 92902594.8
(22) Date de dépôt: 19.12.1991
(51) Int. Cl.: C09K 7/02

(54) **APPLICATION DES BOUES AU SCLEROGLUCANE AU FORAGE DES PUITS DEVIES**
Verwendung von Scleroglucanschlammen zum Bohren von Abgelenkten Erdölbohrungen.
APPLICATION OF SCLEROGLUCANE SLURRIES TO THE DRILLING OF DEFLECTED WELLS

(30) Priorité: 21.12.1990 FR 9016067
(43) Date de publication de la demande: 07.01.1993
(73) Titulaire: ELF AQUITAINE, 92400 Courbevoie (FR)
(72) Inventeur: DONCHE, Alain, F-64119 Jurançon (FR); VAUSSARD, Alain, F-64000 Pau (FR); ISAMBOURG, Patrick, F-31470 Saint-Lys (FR)
(74) Mandataire: Boillot, Marc
(86) Numéro de dépôt international: FR9101032
(87) Numéro de publication internationale: WO9211340

(56) Documents cités:
- EP-A- 0 259 939
- FR-A- 2 570 754
- FR-A- 2 570 755
- FR-A- 2 570 756

## Description

La présente invention concerne l'application d'une boue comprenant du scléroglucane non raffiné aux forages présentant un angle de déviation par rapport à la verticale compris entre 40° et 70°.

La boue de forage est un mélange plus ou moins complexe d'un liquide de base, eau ou huile, et de produits divers, utilisé pour le forage des puits. Cette boue, injectée dans le train de tiges de forage, circule par un mouvement ascendant dans l'espace annulaire compris entre les parois des formations géologiques forées et le train de tiges.

Pour les forages verticaux, l'écoulement de la boue dans l'espace annulaire est le plus souvent de type laminaire. Cet écoulement assure l'élimination des déblais arrachés au front de taille qui sont transportés vers la surface dans l'espace annulaire et éliminés en surface. On évite ainsi le bourrage de l'outil.

En écoulement laminaire, une particule située au centre de l'annulaire a une vitesse supérieure à la vitesse moyenne et une vitesse inférieure à la vitesse moyenne au voisinage des parois des formations ou du train de tiges. Une particule transportée en un point à faible vitesse aura tendance à basculer ou à faire du sur place. Si le débit de l'écoulement est trop faible, toute particule aura tendance à redescendre du fait de la gravité. Pour éviter ce phénomène et assurer un bon nettoyage du puits de forage, il suffit le plus souvent en forage vertical d'augmenter la viscosité de la boue de sorte que sa portance soit telle que les déblais puissent tenir en quasi suspension dans la boue quand le débit de celle-ci est nul.

Dans le cas de puits déviés toutefois ces phénomènes de retombées gravitaires sont plus difficiles à éviter et l'on observe le plus souvent de véritables lits de déblais d'épaisseur variable qui se forment le long de la génératrice inférieure du puits. Ces accumulations peuvent être particulièrement importantes au niveau des changements du degré d'inclinaison du puits, dans les courbes du forage, et en conséquence détériorer la qualité du nettoyage du puits et provoquer des problèmes accrus de frottement et ainsi diminuer la vitesse d'avancement du puits, voire provoquer le blocage du forage. En cas de forage avec une boue à l'eau, la solution usuellement utilisée pour décrocher et éliminer ou diminuer les accumulations de déblais au cours de forage de puits déviés consiste le plus souvent à provoquer un changement du régime d'écoulement. Pour cela, on injecte par exemple de temps en temps dans le puits des volumes déterminés d'une boue de viscosité largement inférieure ou largement supérieure à celle utilisée en régime normal pour ainsi provoquer soit un régime turbulent caractérisé par des vitesses égales dans tout l'espace annulaire, soit un régime en bouchon caractérisé par des vitesses pratiquement constantes et de même direction sur tout l'espace annulaire. En pratique toutefois, cette solution s'avère de mise en oeuvre délicate et les résultats obtenus sont des plus aléatoires.

Une autre solution pour limiter le problème de l'accumulation des déblais au cours du forage de puits déviés consiste à employer comme boue de forage non pas une boue à l'eau mais une boue à l'huile.

Les boues à huile sont caractérisées par un comportement rhéologique de type "Bingham" avec existence d'une viscosité même pour les très faibles cisaillements. Les boues conservent cette caractéristique en conditions de fond de puits et à haute température. Les boues, la plupart du temps, consistent en une émulsion d'eau dans 30 à 40 % en volume d'huile. Si la viscosité de l'émulsion est insuffisante, on l'ajuste à la valeur souhaitée grâce à l'adjonction de colloïdes minéraux telle la Bentonite par exemple.

On constate qu'avec l'utilisation de boues à huile les accumulations de déblais et les problèmes liés à ces accumulations sont moins critiques qu'avec les forages à l'eau. Les boues à l'huile possèdent en outre un pouvoir lubrifiant beaucoup plus élevé que les boues à l'eau.

Ces boues toutefois non seulement coûtent cher et peuvent être délicates à mettre en oeuvre, en particulier en offshore, mais surtout elles sont entièrement polluantes au point que la législation de certains pays interdit leur rejet. Les boues et les cuttings qu'elles remontent doivent donc de plus en plus être traitées en surface pour éviter toute pollution.

C'est pourquoi en forage on n'emploie les boues à base d'huile que dans un nombre le plus limité de cas.

En outre, l'introduction de solides pour ajuster la viscosité entre autres augmente les risques de colmatage et complique les problèmes d'élimination en surface. L'utilisation de polysaccharides avec e.a. le scléroglucane dans des puits de forage fut décrite dans les demandes EP-A-259 939; FR-A-2 570 754 à 6.

On a maintenant trouvé que l'adjonction d'un biopolymère appelé Scléroglucane, non raffiné connu comme viscosifiant utilisable sur de larges plages de température, de salinité et de pH, à une boue à l'eau utilisée pour le forage de puits déviés permet de diminuer les accumulations de déblais tout en évitant les désavantages liés à l'utilisation de boues à l'huile.

L'invention a pour objet l'application d'une boue à l'eau comportant entre autres constituants une quantité utile de Scléroglucane non raffiné au forage des puits déviés. présentant un angle par rapport à la verticale compris entre 40 et 90°. L'application selon l'invention toutefois est particulièrement avantageuse pour les puits dont l'angle de déviation par rapport à la verticale est compris entre 40° et 70°. La quantité utile de scléroglucane pour l'application selon l'invention est avantageusement comprise entre 2 et 20 kilos par mètre cube de boue. Avantageusement, on utilisera du Scléroglucane non raffiné dans une quantité préférentiellement comprise entre 4 et 10 kilos par mètre cube de boue.

Les scléroglucanes qui entrent dans la composition des boues dans les applications selon l'invention, sont des homopolysaccharides hydrosolubles non ioniques de poids moléculaires dépassant 500 000 dont les molécules sont constituées d'une chaîne linéaire principale formée de motifs D-glucose liés par des liaisons β1,3 et dont un sur trois est liés à un motif D-glucose latéral par une liaison β1,6. Ces poly-saccharides sont obtenus par fermentation d'un milieu à base de sucre et de sels minéraux sous l'action d'un microorganisme de type Sclérotium. Une description plus complète des scléroglucanes et de leur préparation peut être trouvée dans la citation US-A-3.301.848, dont le contenu est incorporé par référence à la présente description.

Comme source de scléroglucane, on peut par exemple faire appel selon l'invention au scléroglucane isolé du milieu de fermentation, ledit produit se présentant sous forme de poudre ou bien d'une solution plus ou moins concentrée dans un solvant aqueux et/ou hydro-alcoolique, ou encore employer le milieu réactionnel liquide issu de la fermentation et renfermant le scléroglucane en solution.

Le scléroglucane utilisé pour l'application selon l'invention est non raffiné, c'est-à-dire qu'il contient tout ou partie du mycélium du champignon producteur.

L'invention porte sur un procédé d'amélioration des boues à l'eau pour le forage des puits déviés caractérisé en ce qu'on ajoute comme constituant de la boue une quantité utile préférentiellement comprise entre 4 et 10 kilos par mètre cube de boue de scléroglucane non raffiné. On évite ainsi d'avoir à employer des procédés dont l'efficacité est incertaine, se traduisant le plus souvent par une augmentation du temps de forage ou encore d'avoir à employer une boue à huile. Par rapport à l'utilisation d'une boue à l'huile, l'utilisation d'une boue à l'eau à laquelle on ajoute du scléroglucane présente de nombreux avantages. Outre les avantages économiques, la suppression des risques possibles liés à la sécurité pour la mise en oeuvre et l'élimination de tout problème de pollution, l'adjonction de scléroglucane dans une boue à l'eau permet la modification contrôlée du type d'écoulement dans l'espace annulaire du puits et en particulier du profil des vitesses. Le contrôle s'effectue sans apport de solides dans la boue. Pour une boue et des caractéristiques géométriques de puits données, il existe une relation directe entre la quantité de scléroglucane utilisée et le gradient des vitesses de la boue dans l'espace annulaire du puits : on passe d'un écoulement laminaire à un écoulement en plug (ou en bouchon) par simple adjonction d'une quantité déterminable de scléroglucane. Par rapport à une simple boue à l'eau, l'adjonction de scléroglucane améliore la portance de la boue, c'est-à-dire sa capacité à maintenir en suspension des déblais sans qu'il y ait redépôt. Le scléroglucane transmettant à la boue une partie de ses propriétés remarquables connues, la boue obtenue après adjonction ne peut être qu'améliorée comparée à la boue initiale. Il semble en particulier que les boues soient plus lubrifiantes après adjonction de scléroglucane qu'avant. L'introduction de mycélium ne modifie pas ces propriétés participant à l'amélioration du transport des déblais par la boue. Il semble au contraire, de façon surprenante, que l'introduction de mycélium le rend plus efficace encore.

Les avantages d'une boue composée d'une quantité utile de scléroglucane non raffiné en dilution dans une eau de base quelconque et son intérêt pour l'application selon l'invention sont illustrés par les exemples suivants donnés à titre non limitatif, à partir de boues complexes qui ne sont pas spécialement destinées à l'application selon l'invention.

Le matériel utilisé pour les mesures est normalisé (normes du comité API RP 13). La viscosité des solutions testées a été mesurée à l'aide d'un viscosimètre FANN à six vitesses, à savoir 600, 300, 200, 100, 50 et 30 tours par minute, correspondant chacune à un gradient de vitesse exprimé en s⁻¹, respectivement 1020, 510, 340, 170, 85, 51 s⁻¹. Le viscosimètre FANN fournit une mesure de contrainte de cisaillement dite lecture FANN exprimée ici en pascal. Le viscosimètre FANN est un appareil à cylindres coaxiaux dont le rotor est entraîné à l'aide d'un moteur électrique. On mesure la résistance au cisaillement de la boue contenue dans un gobelet dans lequel on immerge les cylindres coaxiaux. On lit sur un cadran gradué la résistance au cisaillement à différentes vitesses de rotation du rotor. La viscosité de la boue entraîne une rotation du stator indiquée sur le cadran de lecture.

Les mesures de filtration sont effectuées après trente minutes à l'aide d'un filtre presse API et s'expriment en millilitres.

Le scléroglucane utilisé est fabriqué par SANOFI BIO INDUSTRIES à partir d'une souche de sclérotium Rolsfii. On a utilisé une qualité non raffinée comprenant de l'ordre de 25 % de résidus de mycélium commercialisée sous le nom d'ARTIGUM CS6.

Les caractéristiques rhéologiques sont indiquées par la donnée de viscosités exprimées en pascal seconde (Pa.s), mais également de grandeurs dites "gels", d'une viscosité apparente VA, d'une viscosité plastique VP, d'une "yield value" YV couramment exploitée par les spécialistes de boues de forage. Les "gel 0" et "gel 10", mesurés au viscosimètre FANN, permettent d'apprécier la thixotrophie de la boue, c'est-à-dire son aptitude à se gélifier lorsque le fluide est immobile. Cette propriété pseudoplastique se caractérise par un seuil d'écoulement en-dessous duquel le fluide reste immobile, et une diminution plus ou moins rapide de la viscosité dès qu'il y a écoulement.

Pour obtenir la valeur des gels, le mode opératoire est le suivant : on fait tourner le rotor du viscosimètre à 600 tr/mn pendant 30s, puis on stoppe le moteur. On attend 10s et on met le moteur en rotation à 3 tr/mn. La déviation maximale due constitue le gel initial ou "gel 0". On laisse ensuite reposer la boue 10 mn. Le nombre maximal en constitue le "gel 10".

Pour obtenir la viscosité apparente de la boue en centipoises, on divise la lecture FANN à 600 tr/mn par deux. Le calcul de la viscosité plastique s'effectue en faisant la soustraction entre la lecture FANN à 600 tr/mn et la lecture FANN à 300 tr/mn. La yield value est obtenue en faisant la différence entre la viscosité apparente et la viscosité plastique, et en multipliant par deux cette différence. La yield value exprime la tension minimale en dessous de laquelle il n'y a pas d'écoulement pour des régimes d'écoulement laminaire.

### Exemple 1 : Evaluation de la portance

On a cherché à étudier les indices de portance YV/VP de fluides bentonitiques se rapprochant par leurs caractéristiques d'une boue au scléroglucane CS6 comprenant pour 1 l d'eau douce, 4 g de CS6 M (avec mouillant), 20 g de Bentonite CLARSOL, 75 g d'argile naturelle et de la soude pour obtention d'un pH égal à 9,6.
- Composition des boues bentonitiques

| | boues bentonitiques simplifiées | | boue bentonitique |
|---|---|---|---|
| | 1 | 2 | faiblement traitée 3 |
| eau douce | 1 l | 1 l | 1 l |
| bentonite CLARSOL FB2 | 60 g | 60 g | 65 g |
| soude | pour pH 9,2 | pour ph 9,2 | pour ph 9,5 |
| argile naturelle | 75 g | 75 g | 75 g |
| CMC LV | 0 g | 5 g | 0 g |
| lignosulfonate | 0 | 0 | 1 g |
| CMC LV est un carboxyméthylcellulose. | | | |

- Résultats de mesures pour les boues bentonitiques

| | | | | |
|---|---|---|---|---|
| FANN | 600 Pa | 30,6 | | 19,1 |
| | 300 Pa | 17,2 | | 11 |
| | 200 Pa | 13,4 | | 8,6 |
| | 100 Pa | 9,6 | | 5,3 |
| | 60 Pa | 7,2 | | 3,3 |
| | 30 Pa | 5,7 | | 2,4 |
| gel O Pa | | 2,9 | | 0,5 |
| gel 10 Pa | | 9,6 | | 1 |
| VA Pa.s | | 32 x 10⁻³ | | 20 x 10⁻³ |
| VP Pa.s | | 28 x 10⁻³ | | 17 x 10⁻³ |
| YV Pa | | 8 x 0,478 | | 6 x 0,478 |
| filtrat API | | 15,5 | 12 | 15 |

- Résultat des mesures pour la boue au scléroglucane

| | | |
|---|---|---|
| FANN | 600 Pa | 21 |
| | 300 Pa | 14,8 |
| | 200 Pa | 12,4 |
| | 100 Pa | 9,6 |
| | 60 Pa | 8,6 |
| | 30 Pa | 6,7 |
| Gel O Pa | | 5,7 |
| Gel 10 Pa | | 13 |
| VA Pa.s | | 22 x 10⁻³ |
| VP Pa.s | | 13 x 10⁻³ |
| YV Pa | | 18 x 0,478 |
| Filtrat API | | 9,7 |

On a utilisé des fluides vieillis dont les propriétés sont stabilisées. On note que les boues bentonitiques simplifiées ont un indice de portance YV/YP défavorable, cet indice devant être idéalement compris entre 1,5/1 et 1/1. La boue légèrement améliorée par ajout de lignosulfonate comme dispersant a un meilleur indice dans la mesure où le rapport YV/VP se rapproche davantage de l'unité que dans les cas précédents. On constate toutefois dans le dernier cas qu'une amélioration de l'indice va de paire avec une diminution notable de la viscosité et une réduction de la thixotropie (les gels) très importante, ce qui traduit une portance au repos très insuffisante.

### Exemple 2 : Pouvoir lubrifiant d'une boue au Scléroglucane.

On compare le pouvoir lubrifiant d'une boue au scléroglucane et d'une boue au xanthane. La comparaison des pouvoirs lubrifiants s'effectue par circulation des boues dans un banc d'essais de forage et mesure de leur échauffement avec le temps de forage. Plus lente est la montée en température, meilleur est le pouvoir lubrifiant.

Les conditions dans lesquelles se sont déroulées les essais sont les suivantes :
. Composition des boues

| | |
|---|---|
| - Bentonite FB2 | 20 g/l |
| - CMC | 2 g/l |
| - Scléroglucane (CS6) ou xanthane (XC polymère) | 5 g/l |
| - Soude pour ajuster le ph entre | 8,5 et 9 |

. Outil

| | |
|---|---|
| - Tricône six pouces, type J3 avec trois duses 14/32 | |
| - Vitesse de rotation : | 103 tours/mn |
| - Poids sur l'outil : | 3 tonnes |

. Boue

| | |
|---|---|
| - Débit de boue | 600 litres/mn |
| - Pression boue | 130 bars |
| - Pression | 110 bars |

. Roche
- Anstrude (calcaire à débris oolithique)

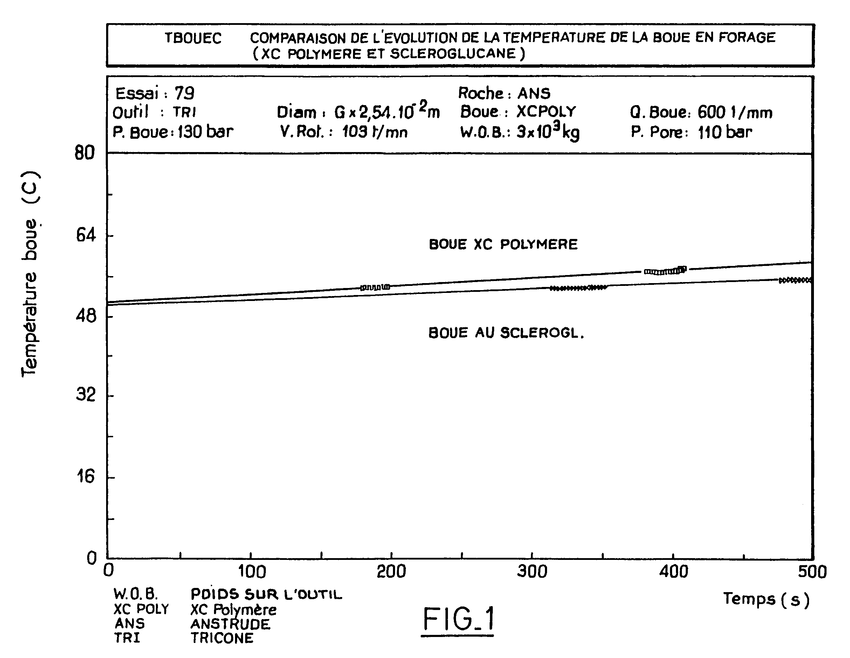

Les résultats sont présentés sur la figure 1 annexée qui représente la variation de la température des boues au cours des essais de forage.

On constate un échauffement moindre de la boue au scléroglucane par rapport à la boue au xanthane. Cette différence -40 % environ en fin d'opération- est caractéristique d'un meilleur pouvoir lubrifiant de la boue au scléroglucane.

## Revendications

1. Application d'une boue à l'eau comportant une quantité utile de scléroglucane non raffiné entre autres constituants au forage des puits présentant un angle compris entre 40 et 90° par rapport à la verticale.

2. Application selon la revendication 1 au forage des puits présentant un angle compris entre 40 et 70° par rapport à la verticale.

3. Application selon la revendication 1 caractérisée en ce que la quantité utile de scléroglucane est comprise entre 2 et 20 kilos par mètre cube de boue.

4. Application selon la revendication 1 caractérisée en ce que la quantité utile de scléroglucane est comprise entre 4 et 10 kilos de scléroglucane non raffiné par mètre cube de boue.

## Claims

1. Application of a mud with water comprising an active quantity of non-refined scleroglucan among other constituents for drilling a well having an angle of between 40 and 90° in relation to the vertical.

2. Application according to Claim 1, for drilling a well having an angle of between 40 and 70° in relation to the vertical.

3. Application according to Claim 1, characterised in that the active quantity of scleroglucan is between 2 and 20 kilos per cubic metre of the mud.

4. Application according to Claim 1, characterised in that the active quantity of scleroglucan is between 4 and 10 kilos of non-refined scleroglucan per cubic metre of mud.

## Patentansprüche

1. Verwendung einer Wasserspülung, die neben anderen Komponenten eine geeignete Menge an nichtraffiniertem Scleroglucan enthält, zum Bohren von Bohrlöchern mit einem Winkel zwischen 40 und 90° in bezug auf die Vertikale.

2. Verwendung nach Anspruch 1 zum Bohren von Bohrlöchern mit einem Winkel zwischen 40 und 70° in bezug auf die Vertikale.

3. Verwendung nach Anspruch 1, dadurch **gekennzeichnet,** daß die geeignete Menge an Scleroglucan 2 bis 20 Kilo pro Kubikmeter Spülung beträgt.

4. Verwendung nach Anspruch 1, dadurch **gekennzeichnet,** daß die geeignete Menge an nichtraffiniertem Scleroglucan 4 bis 10 Kilo pro Kubikmeter Spülung beträgt.
